# EUROPÄISCHE PATENTANMELDUNG

(11) **EP 4 763 612 A1**
(43) Veröffentlichungstag der Anmeldung: **24.06.2026**
(21) Anmeldenummer: 25224750.7
(22) Anmeldetag: 18.12.2025
(51) Int. Cl.: B60P 3/34, B60J 7/16

(54) **INNENRAUMERWEITERUNGSVORRICHTUNG EINER UNTERBRINGUNGSEINRICHTUNG**

(30) Priorität: 20.12.2024 DE 102024139357
(71) Anmelder: X GLOO GmbH & Co. KG, 83250 Marquartstein (DE)
(72) Erfinder: ALLERTSEDER, Thomas, 83250 Marquartstein (DE); LIZBA, Florian, 83250 Marquartstein (DE)
(74) Vertreter: Winter, Brandl - Partnerschaft mbB

(57) **Zusammenfassung**

Offenbart sind: eine Innenraumerweiterungsvorrichtung (2) für ein Fahrzeug (4) oder einen Anhänger, mit: einem beweglichen Abschnitt (6), einem textilen Flächengebilde (8) und einem Kniehebel (14), welcher bei einem Verbringen des beweglichen Abschnitts (6) in eine eingefahrene und/oder eingeklappte Position eine Bewegung hin zu einem Raummittenabschnitt bzw. -bereich (16) der Innenraumerweiterung (10) ausführt und eine Bewegung des textilen Flächengebildes (8) hin zu dem Raummittenabschnitt bzw. -bereich (16) der Innenraumerweiterung (10) ermöglicht; ein Verfahren zum Einfahren und/oder Einklappen eines beweglichen Abschnitts (6) einer Innenraumerweiterungsvorrichtung (2); eine Verwendung der Innenraumerweiterungsvorrichtung (2); und ein Fahrzeug (4) oder ein Anhänger mit der Innenraumerweiterungsvorrichtung (2).

## Beschreibung

Die Offenbarung betrifft eine Innenraumerweiterungsvorrichtung, welche an einer Unterbringungseinrichtung, bevorzugt einem Fahrzeug oder einem Anhänger, weiter bevorzugt Campingfahrzeug oder Campinganhänger, angeordnet oder anordenbar ist, mit: einem beweglichen Abschnitt, welcher sowohl in eine ausgefahrene und/oder ausgeklappte Position als auch in eine eingefahrene und/oder eingeklappte Position bringbar ist und einem textilen Flächengebilde, welches in der ausgefahrenen und/oder ausgeklappten Position des beweglichen Abschnitts zusammen mit dem beweglichen Abschnitt eine Innenraumerweiterung der Unterbringungseinrichtung ausbildet/ bereitstellt.

### Stand der Technik

Innenraumerweiterungen für eine Unterbringungseinrichtung wie etwa ein Fahrzeug oder einen Anhänger dienen prinzipiell zur Vergrößerung des Nutzungsraumes des Fahrzeugs (oder Anhängers), während dieses (oder dieser) sich vorzugsweise im Stand befindet. Dabei kann der Nutzungsraum untereinander verbunden oder getrennt sein. Es ist bekannt, dass ein Wandabschnitt der Innenraumerweiterung aus verschiedenen Materialien, wie Metalle, Kunststoffe, Textilien, Naturmaterialien, Verbundwerkstoffe, etc. bestehen kann und dabei entweder biegeschlaffe oder biegesteife Strukturen aufweist.

Aus DE 10 2017 206 260 A1 oder DE 10 2021 114 464 A1 ist bekannt, dass eine Führung von biegesteifen Wandabschnitten mittels scharnierartiger Verbindungen untereinander (Filmscharniere) origamiartig erfolgt. Bei biegeschlaffen Wandabschnitten ist im Stand der Technik bekannt, dass außenliegende scherenartige Mechanismen an Wandabschnitten vorgesehen sind, die biegeschlaffe Strukturen spannen und führen, dabei jedoch die Innenraumerweiterung aufgrund der außenliegenden Lage einschränken bzw. verkleinern. US 7 677 641 B1 offenbart eine solche Innenraumerweiterung.

Bei bekannten derartig geführten Wandabschnitten aus biegeschlaffen Strukturen tritt häufig das Problem auf, dass unter Realrandbedingungen die Führung versagt und keine wohldefinierte Endlage der biegeschlaffen Strukturen herbeigeführt werden kann. In diesem Fall werden die biegeschlaffen Strukturen leicht beschädigt und müssen zusätzlich manuell in die vorgesehene Endlage gebracht werden. Dies führt neben dem erhöhten Materialverschleiß zu längeren Einklappzeiten der Innenraumerweiterungsvorrichtung und verschlechtert somit das Nutzererlebnis.

### Kurzbeschreibung der Offenbarung

Vor diesem Hintergrund ist es Aufgabe der vorliegenden Offenbarung, die voranstehend genannten Nachteile zu vermeiden bzw. zumindest zu mindern, und insbesondere eine Innenraumerweiterungsvorrichtung für eine Unterbringungseinrichtung wie etwa ein Fahrzeug oder einen Anhänger bereitzustellen, welche eine schonende und langlebige Verwendung und ein nutzerfreundliches Erlebnis ermöglicht. Insbesondere soll Wert auf die Nachhaltigkeit gelegt werden, um eine nachhaltige Innenraumerweiterungsvorrichtung bereitzustellen.

Die Aufgabe wird durch eine Innenraumerweiterungsvorrichtung nach Anspruch 1 und durch ein Verfahren zum Einfahren und/oder Einklappen eines beweglichen Abschnitts einer Innenraumerweiterungsvorrichtung nach Anspruch 13 und durch eine Verwendung einer Innenraumerweiterungsvorrichtung nach Anspruch 14 und durch eine Unterbringungseinrichtung nach Anspruch 15 gelöst. Vorteilhafte Ausführungsformen sind in den Unteransprüchen beansprucht und/oder nachfolgend erläutert.

Die Offenbarung betrifft eine Innenraumerweiterungsvorrichtung, welche an einer Unterbringungseinrichtung, bevorzugt einem Fahrzeug oder einem Anhänger, weiter bevorzugt Campingfahrzeug oder Campinganhänger, angeordnet oder anordenbar ist, mit: einem beweglichen Abschnitt, welcher sowohl in eine ausgefahrene und/oder ausgeklappte Position als auch in eine eingefahrene und/oder eingeklappte Position bringbar ist; einem textilen Flächengebilde, welches in der ausgefahrenen und/oder ausgeklappten Position des beweglichen Abschnitts zusammen mit dem beweglichen Abschnitt eine Innenraumerweiterung der Unterbringungseinrichtung ausbildet/ bereitstellt; und einen Kniehebel, welcher an einem Eckabschnitt der Innenraumerweiterungsvorrichtung angeordnet ist und bei einem Verbringen des beweglichen Abschnitts in die eingefahrene und/oder eingeklappte Position eine Bewegung hin zu einem Raummittenabschnitt bzw. -bereich der Innenraumerweiterung ausführt und eine Bewegung des textilen Flächengebildes hin zu dem Raummittenabschnitt bzw. -bereich der Innenraumerweiterung ermöglicht, vorzugsweise das textile Flächengebilde hin zu dem Raummittenabschnitt bzw. -bereich der Innenraumerweiterung zieht.

Die offenbarungsgemäße Innenraumerweiterungsvorrichtung ist dazu vorbereitet und eingerichtet, einen Innenraum zu erweitern/vergrößern. Dabei kann etwa eine modulhafte Bauweise verwendet werden. Unter "modulhaft" ist gemäß der vorliegenden Offenbarung insbesondere zu verstehen, dass die Unterbringungseinrichtung, bevorzugt das Fahrzeug oder der Anhänger, bereits vorhanden ist und die Innenraumerweiterungsvorrichtung nachträglich auf dieser anbringbar ist. Dies ermöglicht in vorteilhafter Weise eine nachhaltige Nutzung, da kundenspezifische Nachrüstoptionen ermöglicht werden, um vorhandene Unterbringungseinrichtungen zu verbessern.

Die offenbarungsgemäße Innenraumerweiterungsvorrichtung ist an einer Unterbringungseinrichtung, bevorzugt dem Fahrzeug oder dem Anhänger angeordnet oder anordenbar. Unterbringungseinrichtungen können dabei beweglich oder unbeweglich sein. Unbewegliche Unterbringungseinrichtungen können dabei Hütten, Wohncontainer oder Tiny-Houses sein. Im Gegenzug dazu könnten bewegliche Unterbringungseinrichtungen etwa Fahrzeuge, Anhänger oder Tiny-Houses auf Rädern sein. Dabei ist das Fahrzeug nicht auf ein Campingfahrzeug beschränkt. Das Fahrzeug kann beispielsweise als ein Kastenwagen oder ein Wohnmobil oder ein Camper-Van ausgebildet sein. Ebenso ist der Anhänger nicht auf einen Campinganhänger beschränkt. Der Anhänger kann beispielsweise ein Wohnwagen sein.

Die Innenraumerweiterungsvorrichtung kann offenbarungsgemäß an einer Unterbringungseinrichtungsseitenwand und/oder einem -dach, bzw. bevorzugt an einer Fahrzeug-/ Anhänger-Seitenwand und/oder bevorzugt einem Fahrzeug-/ Anhänger-Dach und/oder bevorzugt einer Fahrzeug-/ Anhänger-Rückwand angeordnet sein. Auf vorteilhafte Weise können dadurch vielfältige Anwendungsoptionen mit erheblichem Wertschöpfungspotential ermöglicht werden.

Wenn offenbarungsgemäß von dem beweglichen Abschnitt die Rede ist, dann ist dieser definiert als ein Abschnitt, welcher sowohl in eine ausgefahrene und/oder ausgeklappte Position als auch in eine eingefahrene und/oder eingeklappte Position bringbar ist. Solch ein beweglicher Abschnitt kann ein Teil oder die Gesamtheit der Unterbringungseinrichtungsseitenwand, des Unterbringungseinrichtungsdachs bzw. bevorzugt der Fahrzeug-/ Anhänger-Seitenwand, bevorzugt des Fahrzeug-/ Anhänger-Dachs oder bevorzugt der Fahrzeug-/ Anhänger-Rückwand sein. Insbesondere ist der bewegliche Abschnitt ein Wand-/ Dachabschnitt, welcher an der Unterbringungseinrichtungsseitenwand, dem Unterbringungseinrichtungsdach bzw. bevorzugt der Fahrzeug-/ Anhänger-Seitenwand oder bevorzugt dem Fahrzeug-/ Anhänger-Dach oder bevorzugt der Fahrzeug-/ Anhänger-Rückwand angebracht oder anbringbar ist und zusammen mit weiteren Elementen bzw. Komponenten die offenbarungsgemäße Innenraumerweiterungsvorrichtung bildet.

Offenbarungsgemäß ist die ausgefahrene und/oder ausgeklappte Position definiert als eine vorbestimmte Position, welche erreicht wird, wenn die Innenraumerweiterungsvorrichtung den Innenraum erweitert oder vergrößert. Im Gegenzug dazu wird der Innenraum bevorzugt nicht erweitert oder vergrößert, wenn der bewegliche Abschnitt der Innenraumerweiterungsvorrichtung die eingefahrene und/oder eingeklappte Position einnimmt, welche bevorzugt ebenso eine vorbestimmte Position ist.

Der bewegliche Abschnitt kann offenbarungsgemäß grundsätzlich, wenn er lediglich an einer Seite gehoben wird, eine reine rotatorische Bewegung um eine gegenüberliegende Seite beschreiben. Der gleichen Logik folgend kann der bewegliche Abschnitt ebenfalls nur an einem Punkt gehoben werden, sodass eine reine rotatorische Bewegung um einen gegenüberliegender Punkt oder um eine gegenüberliegende Seite vorgesehen sein kann. Dieser Fall wird in der Offenbarung als Ausklappen bezeichnet. Weiterhin kann es jedoch auch sein, dass der bewegliche Abschnitt an zwei Seiten, bzw. an vier Eckpunkten, gehoben wird. Dies kann für eine reine translatorische Bewegung sorgen und wird offenbarungsgemäß als Ausfahren bezeichnet. Wenn die beiden Typen (Ausklappen und Ausfahren) kombiniert werden, können ebenfalls kombinierte rotatorische und translatorisch Bewegungen ermöglicht werden.

Der bewegliche Abschnitt der Innenraumerweiterungsvorrichtung kann somit offenbarungsgemäß vorgesehen sein, eine (ausschließlich) translatorische Ausfahrbewegung oder eine (ausschließlich) rotatorische Ausklappbewegung oder eine kombinierte Ausfahr- und Ausklappbewegung zu beschreiben. Durch die Kombinationsmöglichkeiten der verschiedenen Bewegungskomponenten wird auf vorteilhafter Weise ein Konstruktionsraum vergrößert, wodurch ein anmutendes Design mit gleichzeitig verbessertem technischen Nutzen ermöglicht wird.

Wenn der bewegliche Abschnitt ausgefahren und/oder ausgeklappt ist, dann ist der Innenraum erweitert oder vergrößert. Folglich wird durch das Ausfahren und/oder Ausklappen des beweglichen Abschnitts die Innenraumerweiterung bzw. eine Innenraumvergrößerung bereitgestellt. Als Folge dessen kann die Innenraumerweiterung ebenfalls als Innenraumvergrößerung bezeichnet werden.

Das textile Flächengebilde ist offenbarungsgemäß ein Textil, welches allgemein zweidimensionale Flächen ausbilden kann. Durch Kombination von zumindest einer Innen- und einer Außenhaut eines textilen Flächengebildes können allerdings ebenfalls dreidimensionale Räume gebildet werden. Insbesondere ist dies der Fall, wenn von zumindest doppelwandigen textilen Flächengebilden die Rede ist. Diese können die Fähigkeit der Aufblasbarkeit/ Auffüllbarkeit mit einem Fluid ermöglichen, wodurch rigide, insbesondere nicht biegeschlaffe, Strukturen gebildet werden können. Diese Ausführungsform ist offenbarungsgemäß vorteilhaft im Vergleich zu einem biegeschlaffen textilen Flächengebilde. Dabei ist zu verstehen, dass dieser durch ein doppelwandiges textiles Flächengebilde gebildete dreidimensionale Raum/ diese durch doppelwandige textile Flächengebildet gebildeten dreidimensionalen Räume in Kombination miteinander ermöglichen, den Raum der Innenraumerweiterung, bevorzugt zusammen mit dem voranstehend angesprochenen beweglichen Abschnitt aufzuspannen. Die Offenbarung ist jedoch nicht auf das Bereitstellen bzw. Vorsehen eines aufblas-/ bzw. auffüllbaren textilen Flächengebildes beschränkt. Das textile Flächengebilde kann entsprechend offenbarungsgemäß auch ein im Wesentlichen zweidimensionales, biegeschlaffes Textil sein.

Auf vorteilhafter Weise wird durch das textile Flächengebilde eine schnelle und sichere Öffnung sowie Schließung der Innenraumerweiterungsvorrichtung ermöglicht. Weiterhin sei genannt, dass textile Flächengebilde gleichzeitig ein nostalgisches Gefühl des althergebrachten und bewährten Zeltens vermitteln, bei gleichzeitig modernstem Design mit modernster Konstruktion. Dies erhöht die Zufriedenheit der Anwender bzw. Nutzer.

Wenn offenbarungsgemäß von der Innenraumerweiterung die Rede ist, dann stellt diese einen zusätzlichen Volumenabschnitt bzw. Volumenbereich dar, welcher einen ursprünglichen Volumenabschnitt bzw. Volumenbereich innerhalb der Unterbringungseinrichtung bzw. bevorzugt des Fahrzeugs oder bevorzugt des Anhängers vergrößert. Mit anderen Worten ergibt sich ein Gesamtvolumen aus Addition des ursprünglichen Volumenabschnitts mit dem zusätzlichen Volumenabschnitt.

Die Innenraumerweiterungsvorrichtung gemäß der vorliegenden Offenbarung umfasst einen Kniehebel. Unter einem "Kniehebel" ist offenbarungsgemäß insbesondere ein Mechanismus zu verstehen, welcher zumindest ein oberes und ein unteres Kniehebelteil umfasst, welche über ein Positionierführungselement, bevorzugt ein Gelenk, miteinander verbunden sind. Ein solcher Kniehebel kann ebenfalls als Positioniermechanismus bezeichnet werden. Unter einem Kniehebel ist somit in anderen Worten offenbarungsgemäß insbesondere ein Kniegelenk zu verstehen.

Der Kniehebel ist offenbarungsgemäß in seiner Bewegung derart eingeschränkt, dass keine reine Bewegung in Richtung einer Kante zwischen zwei benachbarten Eckabschnitten der Innenraumerweiterungsvorrichtung ermöglicht wird. Beachtet man alle Bewegungskomponenten, so ist die resultierende Richtung stets hin zu dem Raummittenabschnitt bzw. -bereich, etwa derart, dass die resultierende Richtung sich aus zumindest zwei Bewegungskomponenten zusammensetzt, nämlich einer ersten Bewegungskomponente hin zu einem ersten benachbarten Eckabschnitt und einer zweiten Bewegungskomponente hin zu einem zweiten benachbarten Eckabschnitt, betrachtet von dem Eckabschnitt, an welchem der entsprechende Kniehebel angeordnet ist, so dass keine reine Bewegung hin zu einem der beiden benachbarten Eckabschnitte ermöglicht ist. Veranschaulicht entspricht dies gemäß einem bevorzugten Ausführungsbeispiel im Wesentlichen bzw. näherungsweise einer Bewegung zu dem diagonal gegenüberliegenden Eckabschnitt. Mit anderen Worten zeigt die resultierende Bewegungskomponente immer hauptsächlich Richtung Raummittenabschnitt bzw. - bereich der Innenraumerweiterung, wobei die resultierende Bewegungskomponente nicht zwangsläufig exakt in Richtung des diagonal gegenüberliegenden Eckabschnitts verlaufen muss.

Wenn offenbarungsgemäß von Eckabschnitten die Rede ist, dann sind diese allgemein definiert als die Eck-/ bzw. Kantenbereiche eines Quaders oder Polyeders. Dabei verläuft die Verbindungslinie von zwei Ecken des Quaders oder Polyeders zur Grundfläche des Unterbringungseinrichtungsdachs und/der der Unterbringungseinrichtungsseitenwand oder bevorzugt des Fahrzeug-/ Anhänger-Dachs und/oder bevorzugt der Fahrzeug-/ Anhänger-Seitenwand und/oder bevorzugt der Fahrzeug-/ Anhänger-Rückwand senkrecht und entspricht folglich einer virtuellen Kante, so dass der Eckabschnitt offenbarungsgemäß im Wesentlichen einen Abschnitt bzw. Bereich entlang dieser Kante meint. Bevorzugt verläuft entlang einer solchen virtuellen Kante der zugehörige Kniehebel im Wesentlichen. Mit anderen Worten ausgedrückt ist die Lage eines Kniehebels im Wesentlichen bzw. bevorzugt orthogonal zur zugehörigen Grundfläche, welche bei Anordnung der Innenraumerweiterungsvorrichtung an der Unterbringungseinrichtungsseitenwand der Unterbringungseinrichtungsseitenwand oder einer auf dieser angebrachten Grundfläche entspricht und bei Anordnung der Innenraumerweiterungsvorrichtung an dem Unterbringungseinrichtungsdach dem Unterbringungseinrichtungsdach oder einer auf diesem angebrachten Grundfläche entspricht. Bevorzugt entspricht die Grundfläche bei Anordnung der Innenraumerweiterungsvorrichtung an der Fahrzeug-/ Anhänger-Seitenwand der Fahrzeug-/ Anhänger-Seitenwand oder einer auf dieser angebrachten Grundfläche und bei Anordnung der Innenraumerweiterungsvorrichtung an dem Fahrzeug-/ Anhänger-Dach dem Fahrzeug/ Anhänger-Dach oder einer auf diesem angebrachten Grundfläche und bei Anordnung der Innenraumerweiterungsvorrichtung an der Fahrzeug-/ Anhänger-Rückwand der Fahrzeug-/ Anhänger-Rückwand oder einer auf dieser angebrachten Grundfläche.

Es ist zu verstehen, dass sich offenbarungsgemäß, wenn die Innenraumerweiterungsvorrichtung an einem Unterbringungseinrichtungsdach, insbesondere einem Fahrzeug-/ Anhänger-Dach, angebracht ist, der bewegliche Abschnitt nicht parallel zum Unterbringungseinrichtungsdach ausfahren bzw. aufstellen muss. Der bewegliche Abschnitt kann in anderen Worten in eine kombinierte ausgefahrene und ausgeklappte Position gebracht werden und somit eine schräge Dachebene der Innenraumerweiterungsvorrichtung ausbilden, so dass durch die Innenraumerweiterungsvorrichtung entsprechend ein Polyeder ausgeformt wird.

Weiterhin ist zu verstehen, dass offenbarungsgemäß rechteckige Grundflächen bevorzugt sind. Die Offenbarung ist jedoch nicht darauf beschränkt und es sind beliebige Grundflächen, etwa beliebige dreieckige, viereckige, fünfeckige, sechseckige, etc. Grundflächen, denkbar. Die Kniehebel sind auch in diesem Fall in Eckabschnitten der Grundflächen, insbesondere im Übergangsbereich zwischen zwei Kanten der Grundfläche, angeordnet und bewegen sich zu dem Raummittenabschnitt bzw. - bereich, ganz besonders bevorzugt aber nicht zwingend entlang einer Winkelhalbierenden zwischen den zwei Kanten der Grundfläche.

Wenn offenbarungsgemäß von dem Raummittenabschnitt bzw. -bereich die Rede ist, dann ist damit ein Volumenabschnitt/ -bereich gemeint, welcher im Inneren der Innenraumerweiterung liegt. Dieser Volumenabschnitt/ -bereich entspricht allerdings nicht dem gesamten Volumen der Innenraumerweiterung, da jeweils Bereiche nahe der begrenzenden Oberflächen der durch das textile Flächengebilde gebildeten Wandabschnitte der Innenraumerweiterungsvorrichtung nicht dazugehören. Damit ist verdeutlicht, dass der, nun vollständig ausgeschriebene, Raummittenabschnitt bzw. Raummittenbereich den geometrischen Raummittenpunkt umfasst, jedoch nicht die Flächenmittelpunkte der begrenzenden Oberflächen der Wandabschnitte.

Je kleiner das Volumen des Raummittenabschnitts bzw. -bereichs, desto eingeschränkter ist die Richtung der Bewegung des offenbarten Kniehebels. Entspricht zum Beispiel das Volumen des Raummittenabschnitts bzw. -bereichs zu 80% dem Gesamtvolumen der Innenraumerweiterung, dann ist die Bewegungsfreiheit bzw. - möglichkeit größer, als wenn die Prozentangabe sich verringert (auf beispielsweise 20%). Mit anderen Worten entspricht die Bewegung des Kniehebels einer Bewegung zum geometrischen Raummittenpunkt, wenn die Prozentangabe gegen 0 strebt. Mit noch anderen Worten wird durch Ausschluss der Bereiche nahe der begrenzenden Oberflächen der Wandabschnitte ebenfalls eine Bewegung entlang der Kanten zwischen zwei Eckabschnitten ausgeschlossen.

Wenn offenbarungsgemäß von Wandabschnitten die Rede ist, dann sind diese definiert als die zur Seite begrenzenden Flächen eines Quaders. Es ist zu verstehen, dass mehrere Wandabschnitte, insbesondere alle vier Wandabschnitte, durch ein zusammenhängendes, insbesondere nicht zerstörungsfrei trennbares, textiles Flächengebilde, bevorzugt aufblasbar und zumindest doppelwandig, gebildet sein können. Weiterhin ist zu verstehen, dass jedoch auch mehrere Wandabschnitte, insbesondere alle vier Wandabschnitte, durch separate, bevorzugt aufblasbare und zumindest doppelwandige, textile Flächengebilde gebildet sein können.

Bei einer bevorzugten Ausführungsform der Innenraumerweiterungsvorrichtung an der Unterbringungseinrichtungsseitenwand oder bevorzugt an der Fahrzeug-/ Anhänger-Seitenwand und/oder bevorzugt der Fahrzeug/ Anhänger-Rückwand bildet sich durch Ausklappen/ Ausfahren des beweglichen Abschnitts zumindest ein Boden- und zumindest ein Dachelement, sowie zumindest drei Wandabschnitte aus. Mit anderen Worten kann der fehlende vierte Wandabschnitt eine Verbindung zum Unterbringungseinrichtungs-Innenraum, bzw. bevorzugt zum Fahrzeug/ Anhänger-Innenraum, ausbilden. Bevorzugt weisen dabei zumindest zwei Wandabschnitte das textiles Flächengebilde, insbesondere das zumindest doppelwandige aufblasbare textile Flächengebilde, als Material auf, ganz bevorzugt bildet dabei der zur Unterbringungseinrichtungsseitenwand, insbesondere zur Fahrzeug-/ Anhänger-Seitenwand oder zur Fahrzeug-/ Anhänger-Rückwand, parallele Wandabschnitt den offenbarungsgemäßen beweglichen Abschnitt, welcher in die ausgeklappte/ ausgefahrene Position bringbar ist, während hingegen das Bodenelement, das Dachelement und zwei der drei Wandabschnitte durch das textile Flächengebilde gebildet werden.

Bei einer anderen bevorzugten Ausführungsform der Innenraumerweiterungsvorrichtung auf dem Unterbringungseinrichtungsdach, bevorzugt dem Fahrzeug-/ Anhänger-Dach, entstehen durch Ausklappen/ Ausfahren des beweglichen Abschnitts ebenfalls Wandabschnitte, insbesondere vier Wandabschnitte, wobei das Bodenelement insbesondere eine Verbindung zu dem Unterbringungseinrichtungs-Innenraum, bzw. bevorzugt zu dem Fahrzeug-/ Anhänger Innenraum, insbesondere mittels Auslassungen zu dem Unterbringungseinrichtungs-Innenraum, bzw. bevorzugt zu dem Fahrzeug-/ Anhänger-Innenraum, umfasst. Das Boden- und Dachelement weist dabei bevorzugt ein biegesteifes Material auf und die Wandabschnitte ganz bevorzugt das textile Flächengebilde, insbesondere das zumindest doppelwandige, aufblasbare textile Flächengebilde, als Material auf. Gemäß dieser Ausführungsform bildet das Dachelement den offenbarungsgemäßen beweglichen Abschnitt.

Es ist von Vorteil, wenn die Wandabschnitte ein zumindest doppelwandiges aufblasbares textiles Flächengebilde als Material aufweisen. Dies ermöglicht beispielsweise eine Isolierung für Schall sowie Temperatur, eine Beständigkeit für UV- und Wetterschutz. Weiterhin ist das zumindest doppelwandige aufblasbare textile Flächengebilde gefährdungsarm sowie einbruchsicher. Dies ermöglicht auf vorteilhafte Weise hohen Schlafkomfort, Privatsphäre und Benutzerfreundlichkeit.

Das Bodenelement weist bevorzugt ein biegesteifes Material auf. Dadurch können auf vorteilhafter Weise Belastungen, welche durch den/die Anwender/Nutzer eingeleitet werden, auf definierte Krafteinleitungsstellen an der Unterbringungseinrichtung, bevorzugt am Fahrzeug oder am Anhänger, weiter bevorzugt an dessen Karosserie und Fahrgestell, verteilt werden. Dies verhindert Schädigung und ermöglicht eine nachhaltige Nutzung. Es ist dabei zu verstehen, dass das Bodenelement ein Lattenrost oder einen nach unten offenen Rahmen darstellen kann.

Bei einer weiteren Ausführungsform entfällt das zusätzliche Bodenelement, da dieses durch die bereits vorliegenden Strukturen gebildet wird.

Bevorzugt ist der Kniehebel offenbarungsgemäß ausgebildet und vorgesehen, um das textile Flächengebilde zwangszuführen. Mit anderen Worten besteht bevorzugt aber nicht zwingend eine ständige Verbindung zwischen Kniehebel und dem textilen Flächengebilde, bevorzugt in dem Eckabschnitt der Innenraumerweiterungsvorrichtung zwischen zwei aneinander angrenzenden Wandabschnitten des textilen Flächengebildes. Mit noch anderen Worten formuliert reagiert das textile Flächengebilde mit einer Bewegung, wenn sich der Kniehebel bewegt. Dies gilt bevorzugt sowohl wenn der bewegliche Abschnitt in die ausgefahrene und/oder ausgeklappte Position bewegt wird, als auch wenn der bewegliche Abschnitt in die eingefahrene und/oder eingeklappte Position bewegt wird, als auch in allen möglichen Zwischenzuständen.

Der Kniehebel kann offenbarungsgemäß an dem Eckabschnitt, insbesondere vollständig, innerhalb der Innenraumerweiterung/ in einem durch die Innenraumerweiterungsvorrichtung gebildeten Innenraum/ innenliegend in Bezug auf das textile Flächengebilde angeordnet sein. Mit anderen Worten ausgedrückt kann der Kniehebel dann nicht, vorausgesetzt die umschließenden Wandabschnitte und das Boden- sowie das Dachelement sind lichtundurchlässig, von einem äußeren Betrachter gesehen werden. Dies trägt auf vorteilhafter Weise dazu bei, ein anmutendes Design bei einer gleichzeitig geschützten, zur Umgebung abgeschlossenen Lage empfindlicher Komponenten zu ermöglichen.

Wenn mehrere Kniehebel vorgesehen sind, beispielsweise an allen (vier) Eckabschnitten der Innenraumerweiterungsvorrichtung, sind bevorzugt alle Kniehebel innerhalb der Innenraumerweiterung/ in einem durch die Innenraumerweiterungsvorrichtung gebildeten Innenraum/ innenliegend in Bezug auf das textile Flächengebilde angeordnet.

Wenn mehrere Kniehebel, beispielsweise vier Kniehebel, vorgesehen sind, welche jeweils an einem Eckabschnitt der Innenraumerweiterungsvorrichtung angeordnet sind, führen bevorzugt die mehreren Kniehebel bei einem Verbringen des beweglichen Abschnitts in die eingefahrene und/oder eingeklappte Position eine Bewegung hin zu dem Raummittenabschnitt bzw. -bereich der Innenraumerweiterung aus und ermöglichen jeweils (ausgehend von dem entsprechenden Eckabschnitt, bevorzugt von allen Eckabschnitten) eine Bewegung des textilen Flächengebildes hin zu dem Raummittenabschnitt bzw. -bereich der Innenraumerweiterung, vorzugsweise ziehen das textile Flächengebilde (ausgehend von dem entsprechenden Eckabschnitt, bevorzugt von allen Eckabschnitten) hin zu dem Raummittenabschnitt bzw. -bereich der Innenraumerweiterung.

Der offenbarungsgemäße Kniehebel kann bei Anordnung an dem Unterbringungseinrichtungsdach ein Bodenführungselement, welches mit dem der Unterbringungseinrichtung zugewandten Bodenelement verbunden ist, ein Positionierführungselement, welches insbesondere die Anbindung/ Verbindung zum textilen Flächengebilde umfasst, ein Dachführungselement, welches mit dem der Unterbringungseinrichtung abgewandten Dachelement verbunden ist, ein erstes unteres Kniehebelteil und ein zweites oberes Kniehebelteil umfassen. Bei Anordnung an der Unterbringungseinrichtungsseitenwand kann der Kniehebel dieselben Bestandteile umfassen, ist allerdings entsprechend um im Wesentlichen bzw. näherungsweise 90° zu drehen. Dabei ist zu beachten, dass die wörtlichen Bedeutungen von Dach, Boden, Seite, oben und unten gegebenenfalls anzupassen sind.

Das Bodenführungselement des Kniehebels kann in vorteilhafter Weise über eine kraft- oder stoffschlüssige Verbindung, vorzugsweise über ein Langloch mit einem Befestigungselement (beispielsweise Schraube), oder verschweißend mit dem Bodenelement verbunden sein. Dabei wird nicht ausgeschlossen, dass auch formschlüssige Verbindungen möglich sind. Eine Schraubverbindung, welche als Befestigungselement gelten kann, stellt beispielsweise einen belastbaren Kraftschluss, aufgrund einer Reibung zwischen dem Befestigungselement und dem Bodenelement durch bestehende formschlüssige Hinterschneidungen der Paarung Außen- und Innengewinde bereit. Ein Langloch ermöglicht in vorteilhafter Weise den Ausgleich von translatorischen und rotatorischen Abweichungen. Jene Abweichungen sind fertigungstechnisch schwierig zu vermeiden. Des Weiteren können durch lösbare, variable Verbindungen Reparaturen erleichtert werden, wodurch die Nachhaltigkeit verbessert wird. Gleiche Möglichkeiten bestehen für das Dachführungselement.

Offenbarungsgemäß kann zumindest einer der beiden Kniehebelteile/ -abschnitte aus Metall oder Kunststoff, vorzugsweise faserverstärkt, bestehen und eine Vollmaterialbauform oder eine Bauform mit Aussparungen oder eine Fachwerkkonstruktion oder eine bionische Konstruktion aufweisen.

Die Offenbarung betrifft einen Kniehebel, welcher bei einem Einknicken im Bereich des Positionierführungselements, eine Bewegung nach Innen durchführen kann, im Wesentlichen eine Bewegung hin zum Raummittenabschnitt bzw. -bereich. Diese Bewegung ermöglicht die Bewegung des textilen Flächengebildes, indem die Bewegung freigegeben wird und sorgt bevorzugt aufgrund der Anbindung des textilen Flächengebildes an den Kniehebel, weiter bevorzugt an das Positionierführungselement, insbesondere zur Mitnahme des textilen Flächengebildes. Dadurch wird auf besonders vorteilhafter Weise das Textil zwangsgeführt, sodass jenes schonend gefaltet wird und insbesondere nicht aus dem vorgesehenen Bereich heraushängt. Damit wird ein, insbesondere unter Realbedingungen durchgeführtes, sicheres, leicht zu benutzendes, schonendes Einklappen/ Einfahren des textilen Flächengebildes der Innenraumerweiterungsvorrichtung ermöglicht. Offenbarungsgemäß kann es auch vorgesehen sein, dass das textile Flächengebilde nicht an den Kniehebel angebunden ist und das textile Flächengebilde etwa so gefertigt, insbesondere gewebt ist, dass es der von dem Kniehebel freigegebenen bzw. ermöglichten Bewegung bzw. Bewegungsmöglichkeit folgt.

Offenbarungsgemäß ist eine vorteilhafte Weiterbildung des textilen Flächengebildes, dass dieses aufblasbar und zumindest doppelwandig ausgebildet ist und somit ein aufblasbares, doppelwandiges textiles Flächengebilde ist, welches gleichzeitig als Betätigungsmechanismus fungiert. Die aufblasbare Funktion des textilen Flächengebildes entsteht durch untereinander verbundene Membranen, welche mit einem zugehörigen Fluid, vorzugsweise der Umgebungsluft, gefüllt werden und so das textile Flächengebilde die vorgesehene aufgeblasene Form annimmt. In der aufgeblasenen Form bildet das textile Flächengebilde bevorzugt zumindest einen Wandabschnitt/ Wandabschnitte aus, welche zwischen dem Dachelement/ dem beweglichen Abschnitt und dem Bodenelement vorliegen. Es ist zu verstehen, dass dabei das aufblasbare textile Flächengebilde durch Befüllung mit dem Fluid aufgerichtet und durch Ablassung, insbesondere Absaugung, zusammengezogen werden kann. Es ist ferner zu verstehen, dass das Verbringen des beweglichen Abschnitts in die eingeklappte bzw. eingefahrene Position insbesondere erst nach der Ablassung, also wenn wieder ein biegeschlaffes doppelwandiges textiles Flächengebilde vorliegt, möglich ist. In diesem Zustand kann sich das textile Flächengebilde hin zu dem Raummittenabschnitt/ -bereich bewegen, insbesondere in diesen von dem Kniehebel/ den Kniehebeln gezogen werden.

Die Befüllung und Ablassung des aufblasbaren textilen Flächengebildes kann in vorteilhafter Weise ein schnelles, insbesondere ein zwischen 30s bis 180s, vorzugsweise zwischen 90s bis 120s, dauerndes, Verbringen des beweglichen Abschnitts von dem eingefahrenen/ eingeklappten Zustand in den ausgefahrenen/ ausgeklappten Zustand oder umgedreht ermöglichen.

Insbesondere können verschiedene Anbindungsarten des textilen Flächengebildes an den Kniehebel, bevorzugt im Bereich zu dessen Positionierführungselements, realisiert werden. Ohne Anbindung, ermöglicht der Kniehebel die Bewegung des textilen Flächengebildes, beispielsweise wenn dieses geeignet gewebt ist. Bei bestehenden Anbindungen sorgt der Kniehebel für eine Zwangsführung des textilen Flächengebildes, insbesondere durch ein Ziehen.

Eine bevorzugte Anbindung des textilen Flächengebildes am Kniehebel kann an einer Innenhaut des textilen Flächengebildes erfolgen. Dies hat die vorteilhaften Eigenschaften, dass ein Querschnitt, vor allem des aufblasbaren textilen Flächengebildes unverändert bestehen bleibt und keine gegebenenfalls auftretenden Wärmebrücken entstehen. Bevorzugt ist eine Anbindung auf eine "auf Null" abgewebte durchgehende Stelle des textilen Flächengebildes vorgesehen. Dies hat die vorteilhafte Eigenschaft, dass das textile Flächengebilde im Bereich der Anbindung äußerst robust und strapazierfähig ist.

Wenn ein Abschnitt des textilen Flächengebildes "auf Null" abgewebt ist, bedeutet das, dass eine oder mehrere der Schichten an dieser Stelle schrittweise reduziert (verjüngt) werden, bis sie im Wesentlichen vollständig verschwinden. Mit anderen Worten ist das textile Flächengebilde an dieser Stelle eine einlagige Webung.

Ganz besonders bevorzugt stellt das doppelwandige, aufblasbare textile Flächengebilde mit seinem zumindest einen Wandabschnitt/ seinen Wandabschnitten einen pneumatischen Bewegungs- bzw. Betätigungsmechanismus zum Verbringen des beweglichen Abschnitts von seiner eingefahrenen/ eingeklappten Position in seine ausgefahrene/ ausgeklappte Position bereit. Der Bewegungs-/ bzw. Betätigungsmechanismus ist jedoch nicht auf einen pneumatischen Bewegungs-/ bzw. Betätigungsmechanismus beschränkt. Grundsätzlich kann offenbarungsgemäß ein beliebiger Betätigungsmechanismus vorgesehen sein, welcher ausgebildet ist, um den beweglichen Abschnitt der Innenraumerweiterungsvorrichtung pneumatisch, hydraulisch oder mechanisch auszuklappen bzw. auszufahren.

Insbesondere betrifft die Offenbarung auch, insbesondere einlagige, textile Flächengebilde, welche nicht als pneumatischer Betätigungsmechanismus wirken können. Solch eine Ausgestaltung kann bevorzugt mindestens einen pneumatischen, insbesondere zylindrischen, Hubbalg, der in dem/ den jeweiligen Eckabschnitt/en positioniert ist, umfassen. Die Funktion des Hubbalgs kann jedoch auch durch hydraulische, insbesondere Hydraulikzylinder, oder mechanische, insbesondere Klappmechanismen, Betätigungsmechanismen äquivalent erfüllt sein.

Gemäß der Offenbarung kann ebenfalls zumindest ein Hubbalg nahe eines Kniehebels als pneumatischer Betätigungsmechanismus vorhanden sein. Dabei ist zu verstehen, dass das aufblasbare, doppelwandige textile Flächengebilde mit seinem zumindest einen Wandabschnitt/ seinen Wandabschnitten ebenfalls, insbesondere redundant zum Hubbalg, mit einem Fluid befüllbar sein kann. Dies sorgt neben der möglichen Redundanz in vorteilhafter Weise für zusätzliche Vorteile, wie beispielsweise Temperaturisolierung und Schallschutz.

Pneumatische oder hydraulische Betätigungsmechanismen benötigen ferner eine Aufblas- bzw. Ablassvorrichtung, welche durch Erzeugung eines Über-/ Unterdrucks den Betätigungsmechanismus aktuieren. Bei der Ablassvorrichtung wird auf vorteilhafte Weise ein Ablassvorgang verkürzt, was die Benutzererfahrung verbessert. Insbesondere kann dabei dieselbe Vorrichtung als Aufblas- und Ablassvorrichtung ausgebildet und eingerichtet sein.

Alle Ausführungsbeispiele sorgen offenbarungsgemäß zur Vergrößerung des Unterbringungseinrichtungs-Innenraums und somit gleichzeitig zu einer Vergrößerung des Nutzungsraums und auch der Nutzfläche bzw. des Wohnungsraums und gegebenenfalls auch der Wohnfläche. Es ist zu verstehen, dass bei mehreren Innenraumerweiterungen, diese untereinander und/oder mit dem nicht-erweiterten Unterbringungseinrichtungs-Innenraum verbunden oder nicht verbunden sein können.

Gemäß der Offenbarung kann das textile Flächengebilde einen oder mehrere Dichtränder umfassen, durch welche es mit benachbarten Abschnitten verbindbar ist.

Insbesondere können dabei Kederverbindungen genutzt werden. Dies ermöglicht neben einer dichten Verbindung zwischen benachbarten Abschnitten unter anderem die Anbindung von zusätzlichen Elementen, insbesondere Fenster und/oder Türen.

Gemäß einem bevorzugten Ausführungsbeispiel ist ein Abschnitt des zumindest einen Kniehebelteils ein abgewinkelter Abschnitt oder ein gekrümmter Abschnitt oder ein gewölbter Abschnitt. Zumindest einer der Kniehebelteile kann somit als abgewinkeltes/ gekrümmtes/ gewölbtes Kniehebelteil bezeichnet werden. Bevorzugt ist der Abschnitt des zumindest einen Kniehebelteils in Bezug auf das Positionierführungselement, das heißt insbesondere in einer mittenzugerichteten Richtung, weggekrümmt bzw. weggewölbt oder in einer Richtung weg von dem Positionierführungselements abgewinkelt, um die Kniehebelteile, insbesondere in der eingefahrenen bzw. eingeklappten Position des beweglichen Abschnitts, voneinander zu beabstanden.

Besonders bevorzugt ist ein Abschnitt des zumindest einen Kniehebelteils ein gewinkelter Abschnitt, welcher insbesondere in einer Richtung weg von dem Positionierführungselements abgewinkelt ist, um eine Beabstandung zu ermöglichen. Die Beabstandung zwischen den Kniehebelteilen sorgt in vorteilhafter Weise für einen Schutz des textilen Flächengebildes während eines Einklappvorgangs des Kniehebels, ganz bevorzugt ebenfalls nach Beendigung des Einklappvorgangs, wenn das textile Flächengebilde einen gefalteten Zustand einnimmt. Diese Beabstandung ist in vorteilhafter Weise größer als ein, bevorzugt minimaler, sicherer Faltabstand des textilen Flächengebildes.

Wenn von einem sicheren Faltabstand die Rede ist, dann ist damit gemeint, dass das sich faltende bzw. gefaltete textile Flächenerzeugnis weder innerhalb der Flächen noch im Gebiet der Faltung, durch beispielsweise eine unzulässig hohe Druckbelastung auf die übereinanderliegenden textilen Schichten oder eine zu geringe Druckbelastung auf die übereinanderliegenden Schichten durch anschließend herbeigeführte Schädigung durch Reibung, allgemein geschädigt wird. Neben zu geringen Faltabständen sorgen offenbarungsgemäß ebenfalls zu große Faltabstände zu negativen Auswirkungen. So sorgt ein zu groß gewählter Faltabstand, neben Schädigung des Textils, durch vergrößerte äußere Abmessungen auch zu einer Verkleinerung des Unterbringungseinrichtungs-Innenraums bzw. zu einer Vergrößerung der Außenoberfläche der Unterbringungseinrichtung, mit insbesondere bei Fahrzeugen/ Anhängern negativen aerodynamischen Auswirkungen und somit durchaus für einen erhöhten Energiebedarf während der Fahrt. Mit anderen Worten ausgedrückt ist die Bestimmung des sicheren Faltabstands eine Optimierungsaufgabe.

Gemäß der Offenbarung können die Kniehebel weiterhin eine Einklappsynchronisierung oder eine Ausklappsynchronisierung umfassen. Es können somit bevorzugt ein Einklappvorgang des Kniehebels und/oder ein Ausklappvorgang des Kniehebels synchronisiert werden. Die Synchronisierung kann mithilfe von Bowdenzügen und/oder Wellen und/oder Hebeln und/oder Gestängen umgesetzt werden und ist dafür vorgesehen und eingerichtet, dass sich die vorhandenen Kniehebel nach vorherbestimmtem Muster oder gleichzeitig und simultan bewegen. Eine bevorzugte Ausführungsform mit Bowdenzügen nutzt die Rotation der Führungselemente am Kniehebel, um diese mit anderen zugehörigen Führungselement/en an dem/den verbleibenden Kniehebel/n zu synchronisieren. Dabei wird die Rotation in eine Translation umgewandelt. Eine weiter bevorzugte Ausführungsform nutzt Wellen, welche beispielsweise über Zahnräder, insbesondere Kegelräder, die Drehbewegungen der verschiedenen Kniehebelführungselemente synchronisieren.

Bei einer weiteren Ausführungsform können Zahnräder der Einklappsynchronisierung ebenfalls zum Ausfahren/ Ausklappen des beweglichen Abschnitts sorgen, sodass der Kniehebel die Funktionen der Einklapp-/ Ausklappsynchronisierung und des Betätigungsmechanismus umfasst.

Gemäß der Offenbarung kann zumindest ein Kniehebel weiterhin eine Arretierung umfassen. Diese kann manuell oder automatisch betätigt werden und verhindert die Bewegung des entsprechenden Kniehebels. Die Arretierung kann dabei am Dachführungselement und/oder am Positionierführungselement und/oder am Bodenführungselement angebracht sein, um die zugehörige Bewegung zu sperren. Insbesondere kann die Arretierung ein unteres Arretierungsteil, welches mit dem unteren Kniehebelteil fest verbunden ist, ein oberes Arretierungsteil, welches mit dem oberen Kniehebelteil fest verbunden ist und einen Arretierungsriegel, welcher die relative Bewegung zwischen den beiden Arretierungsteilen sperrt, umfassen. Diese Arretierung ist folglich vorgesehen und eingerichtet den Kniehebel mittels einer Einrastfunktion zu sperren. Auf vorteilhafter Weise kann somit im ausgefahrenen/ ausgeklappten Zustand des beweglichen Abschnitts der Innenraumerweiterungsvorrichtung eine redundante Sperrfunktion zum Betätigungsmechanismus umgesetzt werden. Während des eingefahrenen/ eingeklappten Zustands des beweglichen Abschnitts der Innenraumerweiterungsvorrichtung kann dies auf vorteilhafter Weise einen Öffnungsschutz darstellen. Mit anderen Worten kann dies zum Einbruchsschutz beitragen. Dabei wird nicht ausgeschlossen, dass die Arretierung während anderer Zustände nicht gewollt ist. Im Gegenteil kann eine Arretierung während eines Zwischenzustands, also zwischen den ausgefahrenen/ ausgeklappten und eingefahrenen/ eingeklappten Zuständen auf vorteilhafter Weise Zwischenstufen der Innenraumerweiterung ermöglichen. Die Arretierung kann durch einen zusätzlichen Sperrhebel oder Sperrriegel umgesetzt werden. Die Offenbarung ist jedoch nicht darauf beschränkt. Ferner kann beispielsweise ebenso diese Sperrfunktion durch die Einklappsynchronisierung bereitgestellt werden, sodass Rotationen bzw. Translationen gesperrt werden. Bevorzugt ist eine automatisch betätigbare Arretierung, welche zusätzlich Stellantriebe oder Linearantriebe umfasst.

Der Kniehebel ist offenbarungsgemäß dazu vorgesehen und eingerichtet, die Bewegung des textilen Flächengebildes nach Innen hin zu dem Raummittenabschnitt bzw. -bereich zu ermöglichen. Diese Bewegung führt grundsätzlich zu einer Einschnürung des textilen Flächengebildes.

Die Offenbarung betrifft ebenfalls bevorzugt die Einschnürung begünstigende Webmuster des textilen Flächengebildes, welche unterstützend mit der Anbindung an den Kniehebel oder ausschließlich ohne Anbindung an den Kniehebel das textile Flächengebilde einschnüren und zwangsführen. Mit anderen Worten kann die Funktion der Zwangsführung bevorzugt durch begünstigende Webmuster unterstützt werden.

Weiter bevorzugt können begünstigende Webmuster ebenfalls ausschließlich die Zwangsführung ermöglichen, während der Kniehebel die Bewegung ermöglicht.

Offenbarungsgemäß können die Wandabschnitte und/oder das Bodenelement und/oder das Dachelement Auslassungen umfassen, welche dazu vorgesehen und eingerichtet sind, den Einbau von Fenstern, insbesondere Panoramafenstern, und Türen zu ermöglichen. Dabei sind die Auslassungen jedoch nicht auf Fenster und/oder Türen beschränkt. Die Auslassungen können auch zusätzliche Gadgets umfassen und/oder für Halterungen vorgesehen sein.

Ebenfalls ist ein Verfahren offenbart, welches die Bewegung des Kniehebels hin zu einem Raummittenabschnitt bzw. bereich umfasst, wenn der bewegliche Abschnitt der Innenraumerweiterungsvorrichtung einfährt und/oder einklappt bzw. eingefahren und/oder eingeklappt wird. Denn durch diese besondere Bewegung wird eine verknüpfte Bewegung des textilen Flächengebildes ermöglicht. Die Offenbarung betrifft entsprechend auch ein Verfahren zum Einfahren und/oder Einklappen eines beweglichen Abschnitts einer Innenraumerweiterungsvorrichtung, wobei beim Einfahren und/oder Einklappen des beweglichen Abschnitts zumindest der Schritt ausgeführt wird: Bewegen eines an einem Eckabschnitt der Innenraumerweiterungsvorrichtung angeordneten Kniehebels hin zu einem Raummittenabschnitt bzw. -bereich einer von dem beweglichen Abschnitt und einem textilen Flächengebilde ausgebildeten bzw. bereitgestellten Innenraumerweiterung, und ein damit einhergehendes Ermöglichen einer Bewegung des textilen Flächengebildes hin zu dem Raummittenabschnitt bzw. - bereich der Innenraumerweiterung, vorzugsweise ein Ziehen des textilen Flächengebildes hin zu dem Raummittenabschnitt bzw. -bereich der Innenraumerweiterung.

Es ist von Vorteil, wenn eine Anbindung zwischen dem Kniehebel und dem textilen Flächengebilde vorliegt, da somit, als Erweiterung des vorher beschriebenen Verfahrensschritts, das textile Flächengebilde durch die Bewegung des Kniehebels mitgezogen wird.

Es kann von Vorteil sein, wenn ein Schritt ausgeführt wird, welcher bei der Bewegung eines an einem Eckabschnitt der Innenraumerweiterungsvorrichtung angeordneten Kniehebels hin zu einem Raummittenabschnitt bzw. -bereich einer von dem beweglichen Abschnitt und einem textilen Flächengebilde ausgebildeten bzw. bereitgestellten Innenraumerweiterung eine Einklappsynchronisierung ermöglicht, also insbesondere zusätzlich die Bewegung, insbesondere eine vorbestimmte und eingerichtete Bewegung, zumindest eines weiteren Kniehebels ermöglicht.

Es kann auch von Vorteil sein, wenn ein Schritt ausgeführt wird, welcher bei der Bewegung eines an einem Eckabschnitt der Innenraumerweiterungsvorrichtung angeordneten Kniehebels hin zu einem Raummittenabschnitt bzw. -bereich einer von dem beweglichen Abschnitt und einem textilen Flächengebilde ausgebildeten bzw. bereitgestellten Innenraumerweiterung eine Einklappsynchronisierung ermöglicht, also insbesondere zusätzlich die Bewegung, insbesondere eine vorbestimmte und eingerichtete Bewegung, von allen weiteren Kniehebeln ermöglicht.

Weiter kann es von Vorteil sein, wenn ein Schritt ausgeführt wird, welcher die Bewegung eines an einem Eckabschnitt der Innenraumerweiterungsvorrichtung angeordneten Kniehebels durch eine Aktivierung einer Arretierung sperrt. Dadurch kann in weiter vorteilhafter Weise der Kniehebel in einer ausgeklappten Position, bevorzugt ebenfalls in einer eingeklappten Position, gesperrt werden. Mit anderen Worten kann der Kniehebel gesperrt werden, wenn der bewegliche Abschnitt in der ausgefahrenen und/oder ausgeklappten Position ist, bevorzugt jedoch auch, wenn der bewegliche Abschnitt in der eingefahrenen und/oder eingeklappten Position ist.

Die voranstehenden Ausführungen zur offenbarungsgemäßen Vorrichtung gelten im Übrigen mutatis mutandis für das offenbarungsgemäße Verfahren.

Die Offenbarung betrifft auch die Verwendung der voranstehend beschriebenen Innenraumerweiterungsvorrichtung zur Innenraumerweiterung einer Unterbringungseinrichtung, bevorzugt eines Fahrzeugs oder eines Anhängers, weiter bevorzugt eines Campingfahrzeugs oder Campinganhängers.

Die Offenbarung betrifft außerdem eine Unterbringungseinrichtung, bevorzugt ein Fahrzeug oder einen Anhänger, weiter bevorzugt Campingfahrzeug oder Campinganhänger, mit einer voranstehend beschriebenen Innenraumerweiterungsvorrichtung.

### Kurzbeschreibung der Figuren

Die Offenbarung wird nachfolgend anhand von Figuren weiter erläutert. Es zeigen:
- Fig. 1: eine perspektivische Ansicht einer offenbarungsgemäßen Innenraumerweiterungsvorrichtung in der Ausführungsform auf einem Fahrzeugdach;
- Fig. 2: eine perspektivische Ansicht der ausgefahrenen/ ausgeklappten offenbarungsgemäßen Innenraumerweiterungsvorrichtung mit einer Bodenauslassung sowie einer Einklappsynchronisierung und einer Arretierung eines Kniehebels, wobei aus Gründen der Veranschaulichung ein textiles Flächengebilde der offenbarungsgemäßen Innenraumerweiterungsvorrichtung weggelassen wurde;
- Fig. 3: eine perspektivische Ansicht einer offenbarungsgemäßen Innenraumerweiterungsvorrichtung in einem Zwischenzustand;
- Fig. 4: eine Seiten-/ Schnittansicht eines Kniehebels mit Anbindung an ein textiles Flächengebilde der offenbarungsgemäßen Innenraumerweiterungsvorrichtung in einem Zwischenzustand;
- Fig. 5: eine Seiten-/ Schnittansicht des Kniehebels mit Anbindung an das textile Flächengebilde der offenbarungsgemäßen Innenraumerweiterungsvorrichtung in einem weiteren Zwischenzustand;
- Fig. 6: eine Seiten-/ Schnittansicht des Kniehebels mit Anbindung an das textile Flächengebilde der offenbarungsgemäßen Innenraumerweiterungsvorrichtung in einem noch weiteren Zwischenzustand;
- Fig. 7: eine Seiten-/ Schnittansicht eines Kniehebels ohne Anbindung an ein textiles Flächengebilde einer offenbarungsgemäßen Innenraumerweiterungsvorrichtung in einem ausgefahrenen/ ausgeklappten Zustand;
- Fig. 8: eine Seiten-/ Schnittansicht eines Kniehebel mit Anbindung an eine Innenhaut eines textilen Flächengebildes einer offenbarungsgemäßen Innenraumerweiterungsvorrichtung in einem ausgefahrenen/ ausgeklappten Zustand;
- Fig. 9: eine Seiten-/ Schnittansicht eines Kniehebel mit einer durchgehend "auf Null" abgewebten Anbindung an ein textiles Flächengebilde einer offenbarungsgemäßen Innenraumerweiterungsvorrichtung in einem ausgefahrenen/ ausgeklappten Zustand; und
- Fig. 10: eine perspektivische Ansicht einer offenbarungsgemäßen Innenraumerweiterungsvorrichtung mit einem textilen Flächengebilde in einem Zwischenzustand.

Die Figuren sind lediglich schematischer Natur und dienen ausschließlich dem besseren Verständnis der Offenbarung. Gleiche Elemente sind mit denselben Bezugszeichen versehen. Die Merkmale der einzelnen Ausführungsformen können untereinander ausgetauscht werden.

### Detaillierte Beschreibung der bevorzugten Ausführungsformen

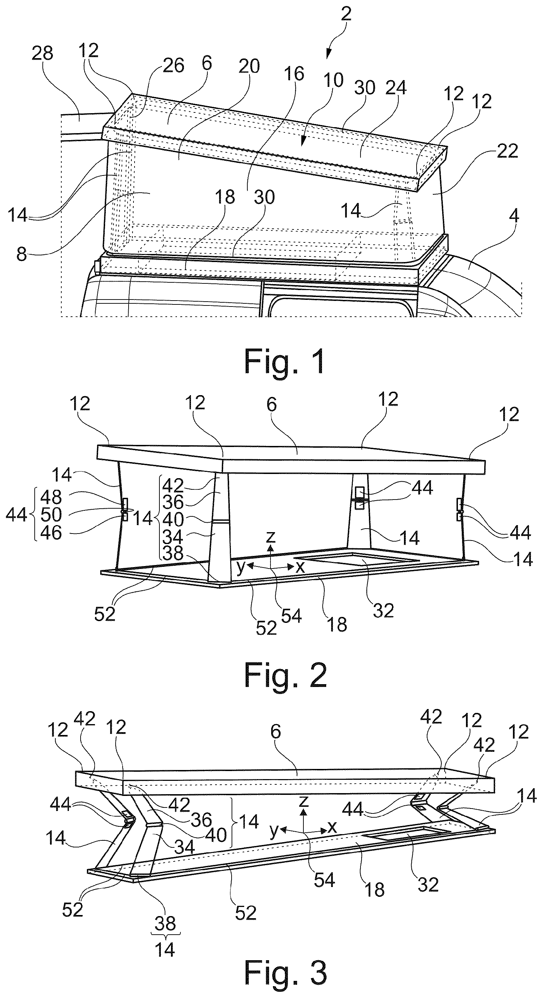

Fig. 1 zeigt ein Ausführungsbeispiel einer offenbarungsgemäßen Innenraumerweiterungsvorrichtung 2 für ein Fahrzeug 4 in einer perspektivischen Ansicht von schräg oben. Die Innenraumerweiterungsvorrichtung 2 weist einen beweglichen Abschnitt 6, welcher in eine dargestellte ausgefahrene und ausgeklappte Position gebracht ist, und ein aufgespanntes textiles Flächengebilde 8, welches zusammen mit dem beweglichen Abschnitt 6 eine Innenraumerweiterung 10 ausbildet/bereitstellt, auf. Weiterhin weist die Innenraumerweiterungsvorrichtung 2 an den Eckabschnitten 12 vier angeordnete Kniehebel 14 auf. Dabei ist erkennbar, dass die Kniehebel 14 in Richtung eines Raummittenabschnitts bzw. -bereichs 16 gedreht und angeordnet sind. Dies ermöglicht die Bewegung der Kniehebel 14 und des textilen Flächengebildes 8 hin zu dem Raummittenabschnitt bzw. -bereich 16, wenn der bewegliche Abschnitt 6 von der dargestellten ausgefahrenen und ausgeklappten Position in eine eingefahrene und eingeklappte Position gebracht wird. In dem dargestellten Ausführungsbeispiel liegt beim Verbringen von der eingefahrenen und eingeklappten Position in die ausgefahrene und ausgeklappte Position eine Kombinationsbewegung vor, da die - in dem spezifischen Beispiel - in Fahrtrichtung vorderen Kniehebel 14 in einer gestreckten Lage jeweils kürzer als die hinteren Kniehebel 14 sind, und somit ein rotatorischer und translatorischer Bewegungsanteil vorgesehen ist, wenn der bewegliche Abschnitt 6 von der eingefahrenen und eingeklappten Position in die ausgefahrene und ausgeklappte Position gebracht wird.

Die Kniehebel 14 sind in Fig. 1 in Bezug auf den aufgespannten Raum, welcher zwischen dem beweglichen Abschnitt 6 und dem textile Flächengebilde 8 liegt, innenliegend. Mit anderen Worten ausgedrückt sind die Kniehebel 14 im Inneren der Innenraumerweiterung 10. Mit noch anderen Worten ausgedrückt sind die Kniehebel 14 von einem außenstehenden Betrachter nicht erkennbar. An dieser Stelle sei darauf hingewiesen, dass die in Fig. 1 dargestellte Innenraumerweiterungsvorrichtung 2, vor allem aufgrund des außenliegenden aufgespannten textilen Flächengebildes 8 ein anmutendes Design aufweist.

Weiterhin weist das Ausführungsbeispiel in Fig. 1 ein Bodenelement 18 auf, welches auf dem Fahrzeug 4 befestigt ist. Dieses Bodenelement 18 erzeugt zusammen mit dem beweglichen Abschnitt 6 die begrenzenden Flächen, zwischen welchen das textile Flächengebilde 8, mit dessen vier Wandabschnitten 20, 22, 24, 26 aufgespannt ist.

Ferner ermöglicht das Bodenelement 18 eine modulhafte Bauweise der Innenraumerweiterungsvorrichtung 2. Folglich kann das Modul der Innenraumerweiterungsvorrichtung 2 im Ganzen an dem Fahrzeug 4 angebracht werden.

Weiterhin wird durch das Bodenelement 18 bevorzugt eine belastbare Fläche ausgebildet, welche die während einer Benutzung der Innenraumerweiterung 10 auftretenden Belastungen verteilt.

Es ist zu verstehen, dass das Bodenelement 18 auch eine oder mehrere Öffnungen aufweisen kann und auch ein nach unten offener Rahmen ein Bodenelement 18 ist. Genauso kann das Bodenelement 18 ein Lattenrost sein. Das Bodenelement 18 muss somit nicht zwingend eine belastbare Fläche sein.

Außerdem zeigt Fig. 1 ein aufgeklapptes Tür-/ Fensterelement 28, welches an dem in Fahrtrichtung hinteren Wandabschnitt 26 der Innenraumerweiterungsvorrichtung 2 angeordnet ist. Dies ermöglicht in vorteilhafter Weise einen Ein- und Ausstieg im Falle eines Türelements oder die natürliche Belüftung im Falle eines Fensterelements.

Diverse Dichtränder 30, vorzugsweise als Kederverbindungen ausgebildet, sind in Fig. 1 dargestellt. Damit ist es möglich, geteilte Abschnitte dicht zu verbinden.

Es ist selbstverständlich klar, dass die Verbindung zum Fahrzeug 4 an dessen belastbaren Abschnitten, vorzugsweise an dessen Karosserie und Fahrgestell ermöglicht wird.

Die Bewegung des Kniehebels 14 wird in Fig. 2 und Fig. 3 dargestellt. Dabei sind jeweils eine perspektivische Seitenansicht der offenbarungsgemäßen Innenraumerweiterungsvorrichtung 2 gezeigt, jedoch ohne textiles Flächengebilde 8. Dadurch kann die Struktur und Bewegung des Kniehebels vorteilhaft nachvollzogen werden.

Das in Fig. 2 gezeigte Ausführungsbeispiel umfasst die vier Kniehebel 14, welche zwischen dem beweglichen Abschnitt 6 und dem Bodenelement 18 mit einer Auslassung 32, in den Eckpositionen 12 angeordnet sind, eine Arretierung 44 an den Kniehebeln 14 und eine Einklappsynchronisierung 52 zwischen den Kniehebeln 14. Zu Erklärungszwecken wird ein Koordinatensystem 54 eingeführt.

Die Auslassung 32 des Bodenelements 18 ist dazu vorgesehen und eingerichtet, die Innenraumerweiterung 10 mit einem Fahrzeug-Innenraum zu verbinden. Dies ermöglicht den komfortablen Zugang zwischen dem Fahrzeug-Innenraum und der Innenraumerweiterung 10 untereinander. Die Auslassung 32 ist in der Figuren relativ klein dargestellt, kann sich jedoch offenbarungsgemäß auch über die gesamte Grundfläche erstrecken, etwa wenn das Bodenelement 18 im Wesentlichen ein nach unten offener Rahmen ist.

Ein (einzelner) Kniehebel 14 umfasst ein unteres Kniehebelteil 34, ein oberes Kniehebelteil 36, ein Bodenführungselement 38, ein Positionierführungselement 40 und ein in der perspektivischen Sicht verdecktes Dachführungselement 42.

Die an einem (einzelnen) Kniehebel 14 angebrachte Arretierung 44 weist ein unteres Arretierungsteil 46, ein oberes Arretierungsteil 48 und einem Arretierungsriegel 50 auf.

In Fig. 2 wird verdeutlicht, dass die Kniehebel 14 nicht vollständig gestreckt und nicht überstreckt sind, obwohl der bewegliche Abschnitt 6 der offenbarungsgemäßen Innenraumerweiterungsvorrichtung 2 in eine ausgefahrene und/oder ausgeklappte Position verbracht ist. Dies ermöglicht auf vorteilhafter Weise ein unmittelbares Einklappen der Kniehebel 14. Mit anderen Worten ausgedrückt, bewegt sich ein Kniehebel 14 hin zu dem Raummittenabschnitt bzw. -bereich 16 allein aufgrund des Einwirkens der Schwerkraft. Diese unmittelbar stattfindende Bewegung kann durch Nutzung einer Arretierung 44 unterbunden werden, sodass ein Kniehebel 14 eine Normalkraft in z-Richtung des Koordinatensystems 54, mit gegebenenfalls auftretenden Querkräften, übertragen kann, wenn die Arretierung 44 die Bewegung sperrt. Solch eine Sperrfunktion der Arretierung 44 wird ermöglicht, wenn, wie beispielhaft dargestellt, der Arretierungsriegel 50 das untere Arretierungsteil 46 mit dem oberen Arretierungsteil 48 verbindet. Es ist zu verstehen, dass der Kniehebel 14 offenbarungsgemäß auch überstreckt sein kann, wobei dann jedoch ein manuelles Eingreifen oder ein Vorsehen eines geeigneten Lösemechanismus vonnöten wäre.

Die Einklappsynchronisierung 52 umfasst mehrere Wellen und ermöglicht eine Übertragung von Drehmomenten zwischen den Kniehebeln 14. Damit wird auf vorteilhafter Weise die Bewegung der Kniehebel 14 vorbestimmt eingestellt, sodass diese sich zusammenhängend und gemeinsam bewegen. Durch diverse kraft- und momentübertragende Verbindungen, insbesondere durch dazwischenliegende Getriebe, der Einklappsynchronisierung 52 mit den Kniehebeln 14, kann die Bewegung derer festgelegt werden. Als Alternative zu Wellen sind auch Seilzüge oder Gestänge denkbar.

Fig. 3 zeigt eine perspektivische Seitenansicht einer offenbarungsgemäßen Innenraumerweiterungsvorrichtung 2 in einem einfahrenden/einklappenden Zwischenzustand. Deutlich dargestellt wird die Bewegung der Kniehebel 14 hin zu dem Raummittenabschnitt bzw. -bereich 16. Folgend werden lediglich die Unterschiede zu Fig. 2 beschrieben.

Die Kniehebel 14 sind unterschiedlich stark eingeklappt, was mit der Einklappsynchronisierung 52 erleichtert wird. Da die Kniehebel unterschiedlich einklappen, vollzieht der bewegliche Abschnitt 6 eine Kombinationsbewegung, welche aus translatorischen und rotatorischen Bewegungskomponenten besteht.

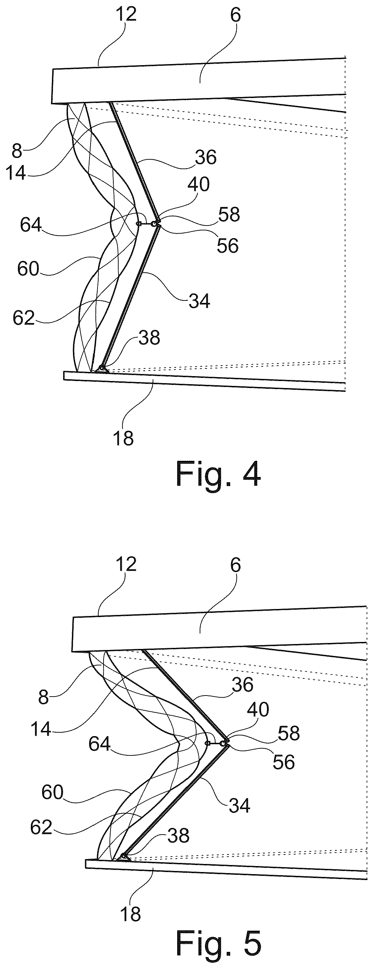

Fig. 4, Fig. 5 und Fig. 6 veranschaulichen die Bewegung eines Kniehebels 14 in einer zweidimensionalen Ansicht. Die Schnittebene der Darstellungen liegt jeweils mittig entlang der Längsachse des entsprechenden Kniehebels 14. Der Kniehebel 14 ist dabei mit dem textilen Flächengebildes 8 verbunden, sodass bei einer Bewegung des Kniehebels 14 hin zu dem Raummittenabschnitt bzw. -bereich 16, das textilen Flächengebildes 8 hin zu dem Raummittenabschnitt bzw. -bereich 16 gezogen wird. Es ist in den Figuren ein aufblasbares, doppelwandiges textiles Flächengebilde 8 dargestellt.

Dieser Kniehebel 14 umfasst entsprechend des abgebildeten Ausführungsbeispiels an dem unteren Kniehebelteil 34 einen abgewinkelten Abschnitt 56 und an dem oberen Kniehebelteil 36 einen weiteren abgewinkelten Abschnitt 58. Diese abgewinkelten Abschnitte sind jeweils an der dem Positionierführungselement 40 zugewandten Seite gelegen. Dies ermöglicht in vorteilhafter Weise eine Beabstandung zwischen dem unteren Kniehebelteil 34 und dem oberen Kniehebelteil 36, vor allem, wenn diese im Wesentlichen parallel zueinander liegen. Eine solche im Wesentlichen parallele Lage der Kniehebelteile 34, 36 zueinander tritt ein, wenn der bewegliche Abschnitt 6 in eine eingefahrene und/oder eingeklappte Position verbracht ist. Diese Beabstandung ist dazu vorgesehen und ausgebildet, einen minimalen Faltabstand des textilen Flächengebildes 8 nicht zu unterschreiten, um dieses besonders schonend zu falten und somit eine nachhaltige Nutzung zu ermöglichen.

Das textile Flächengebilde 8 ist in diesem Ausführungsbeispiel ein aufblasbares textiles Flächengebilde 8, welches mit einem Fluid, vorzugsweise der Umgebungsluft füllbar ist. Das textile Flächengebilde 8 umfasst eine zur Außenumgebung zeigende Außenhaut 60 und eine zum Raummittenabschnitt bzw. -bereich zeigende Innenhaut 62.

Der Kniehebel 8 ist über eine Anbindung 64 mit der Innenhaut 62 verbunden.

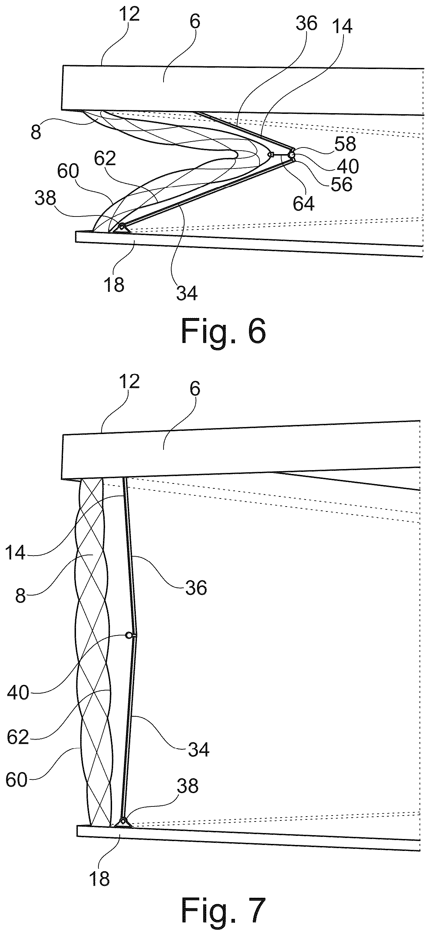

In Fig. 5 und Fig. 6 bewegt sich der Kniehebel 14 stetig weiter in Richtung hin zu dem Raummittenabschnitt bzw. -bereich 16. Dabei wird besonders verdeutlicht, wie das textile Flächengebilde gezogen wird und wie sich die Beabstandung ausbildet.

Fig. 7, Fig. 8 und Fig. 9 zeigen drei Ausführungsbeispiele in einer zweidimensionalen Ansicht. Die Schnittebene der Darstellungen liegt jeweils mittig entlang der Längsachse des entsprechenden Kniehebels 14. Die drei Ausführungsbeispiele veranschaulichen keine Anbindung und die Anbindungen 64, 66 (Anbindungsarten), welche das textile Flächengebilde 8 mit dem Kniehebel 14, an dessen Positionierführungselement 40 verbinden. Folgend werden lediglich die Unterschiede zu Fig. 4, Fig. 5 und Fig. 6 beschrieben.

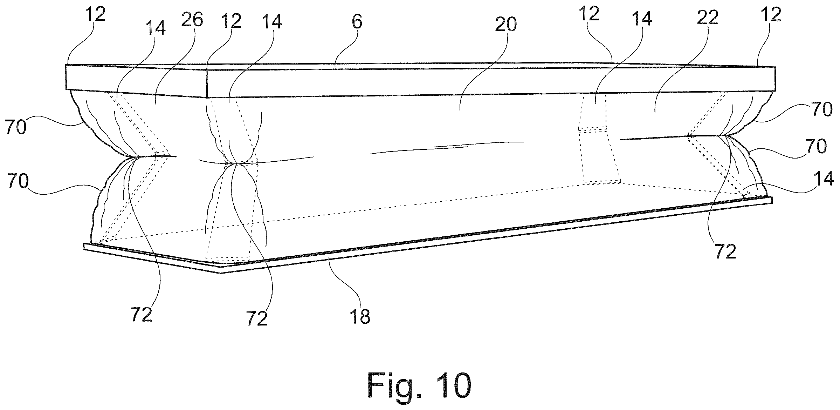

Fig. 7 stellt keine Anbindung zwischen textilem Flächengebilde 8 und Kniehebel 14 dar. So ermöglicht der Kniehebel 14 die Bewegung des textilen Flächengebildes 8 durch Freigabe von Bewegungsraum, welchen der Kniehebel 14 sonst sperren würde. Dies ist insbesondere vorteilhaft, wenn das textile Flächengebilde 8 ein spezifisches Webmuster 70, wie in Fig. 10 angedeutet, besitzt und sich von selbst gezielt einschnürt, während der Bewegung hin zu dem Raummittenabschnitt bzw. -bereich 16.

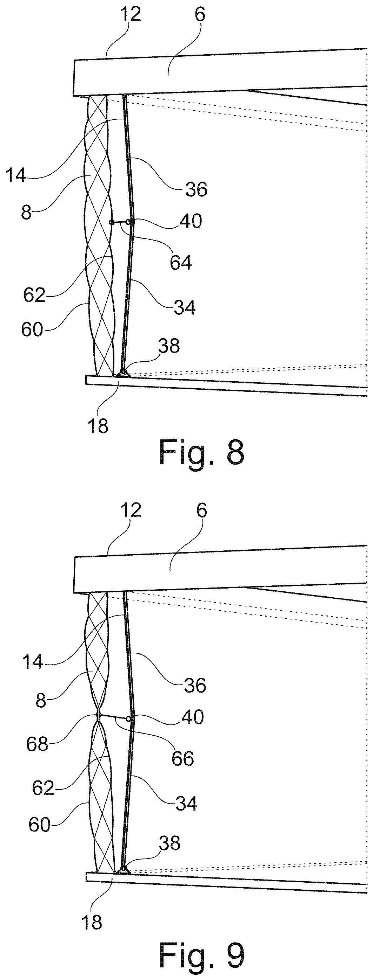

Fig. 8 zeigt eine Anbindung 64 des textilen Flächengebildes 8 zwischen der Innenhaut 62 und dem Positionierführungselement 40 des Kniehebels 14. Erkennbar ist, dass das textile Flächengebilde 8 trotz Anbindung 64, im Querschnitt gleichbleibt und folglich auch im Wesentlichen gleichbleibende Eigenschaften beibehält. Wegen der Anbindung ermöglicht der Kniehebel 14 die Bewegung des textilen Flächengebildes 8 und zieht dabei dieses hin zu dem Raummittenabschnitt bzw. -bereich 16.

Fig. 9 zeigt eine Anbindung 66 des textilen Flächengebildes 8 zwischen einem "auf Null" abgewebten Abschnitt 68 und dem Positionierführungselement 40 des Kniehebels 14. Dabei ist erkennbar, dass sich der Querschnitt des textilen Flächengebildes 14 im Bereich der abgewebten Stelle 68 verengt, um eine äußerst robuste und strapazierfähige Verbindung zu ermöglichen. Wegen der abgewebten Anbindung 68 ermöglicht der Kniehebel 14 die Bewegung des textilen Flächengebildes 8 und zieht dabei dieses hin zu einem Raummittenabschnitt bzw. -bereich, analog zu Fig. 8.

Fig. 10 stellt in einer perspektivischen Ansicht von schräg oben ein Ausführungsbeispiel einer offenbarungsgemäßen Innenraumerweiterungsvorrichtung 2 dar, welche vier Kniehebel 14, einen beweglichen Abschnitt 6, ein Bodenelement 18 und vier Wandabschnitte 20, 22, 24, 26 umfasst. Die Wandabschnitte 20, 22, 24, 26 weisen dabei ein aufblasbares, insbesondere zumindest doppelwandiges textiles Flächengebilde 8 als Material auf, welches sich bei der Bewegung hin zu der eingefahrenen und/oder eingeklappten Position des beweglichen Abschnitts 6 mittels des spezifischen Webmusters 70 von sich aus nach Innen verformt. Diese von sich aus stattfindende Verformung nach Innen kann dabei unterstützend zur Anbindung 64, 66 an den Kniehebel 14 erfolgen und/oder ausschließlich erfolgen, wenn keine Anbindung zum Kniehebel 14 vorliegt. Dabei bildet das textile Flächengebilde eine Einschnürung 72 aus, welche analog zur Bewegung des Kniehebels 14 hin zu dem Raummittenabschnitt bzw. -bereich erfolgt.

Falls das textile Flächengebilde 8 nicht aufblasbar ist, dann ist es bevorzugt, dass eine Anbindung 64, 66 vorliegt, sodass dieses nicht aufblasbare textile Flächengebilde 8 vom Kniehebel 14 hin zu dem Raummittenabschnitt bzw. -bereich gezogen wird.

### Bezugszeichenliste

- 2: Innenraumerweiterungsvorrichtung
- 4: Fahrzeug
- 6: beweglicher Abschnitt
- 8: textiles Flächengebilde
- 10: Innenraumerweiterung
- 12: Eckposition
- 14: Kniehebel
- 16: Raummittenabschnitt bzw. -bereich
- 18: Bodenelement
- 20: Wandabschnitt
- 22: Wandabschnitt
- 24: Wandabschnitt
- 26: Wandabschnitt
- 28: Tür-/ Fensterelement
- 30: Dichtrand
- 32: Bodenelementauslassung
- 34: unteres Kniehebelelement
- 36: oberes Kniehebelelement
- 38: Bodenführungselement
- 40: Positionierführungselement
- 42: Dachführungselement
- 44: Arretierung
- 46: unteres Arretierungsteil
- 48: oberes Arretierungsteil
- 50: Arretierungsriegel
- 52: Einklappsynchronisierung
- 54: Koordinatensystem
- 56: Abwinklung
- 58: Abwinklung
- 60: Außenhaut
- 62: Innenhaut
- 64: Anbindung
- 66: Anbindung
- 68: "auf Null" abgewebte Stelle
- 70: spezifisches Webmuster
- 72: Einschnürung

## Patentansprüche

1. Innenraumerweiterungsvorrichtung (2), welche an einer Unterbringungseinrichtung, bevorzugt einem Fahrzeug (4) oder einem Anhänger, weiter bevorzugt Campingfahrzeug oder Campinganhänger, angeordnet oder anordenbar ist, mit:
einem beweglichen Abschnitt (6), welcher sowohl in eine ausgefahrene und/oder ausgeklappte Position als auch in eine eingefahrene und/oder eingeklappte Position bringbar ist; und
einem textilen Flächengebilde (8), welches in der ausgefahrenen und/oder ausgeklappten Position des beweglichen Abschnitts (6) zusammen mit dem beweglichen Abschnitt (6) eine Innenraumerweiterung (10) der Unterbringungseinrichtung, bevorzugt des Fahrzeugs (4) oder Anhängers, ausbildet bzw. bereitstellt; wobei
die Innenraumerweiterungsvorrichtung (2) weiterhin einen Kniehebel (14) umfasst, welcher an einem Eckabschnitt (12) der Innenraumerweiterungsvorrichtung (2) angeordnet ist und bei einem Verbringen des beweglichen Abschnitts (6) in die eingefahrene und/oder eingeklappte Position eine Bewegung hin zu einem Raummittenabschnitt bzw. -bereich (16) der Innenraumerweiterung (10) ausführt und eine Bewegung des textilen Flächengebildes (8) hin zu dem Raummittenabschnitt bzw. -bereich (16) der Innenraumerweiterung (10) ermöglicht, vorzugsweise das textile Flächengebilde (8) hin zu dem Raummittenabschnitt bzw. -bereich (16) der Innenraumerweiterung (10) zieht.

2. Innenraumerweiterungsvorrichtung (2) nach Anspruch 1, wobei der Kniehebel (14) oder - im Falle von mehreren vorgesehenen Kniehebeln (14) - die Kniehebel (14) vollständig innerhalb der Innenraumerweiterung (10) angeordnet ist bzw. sind.

3. Innenraumerweiterungsvorrichtung (2) nach Anspruch 1 oder 2, wobei diese eine Vielzahl von Kniehebeln (14), vorzugsweise vier Kniehebel (14), umfasst, welche an jeweiligen Eckabschnitten (12) der Innenraumerweiterungsvorrichtung (2) angeordnet sind, und welche bei einem Verbringen des beweglichen Abschnitts (6) in die eingefahrene und/oder eingeklappte Position jeweils eine Bewegung hin zu dem Raummittenabschnitt bzw. -bereich (16) der Innenraumerweiterung (10) ausführen und eine Bewegung des textilen Flächengebildes (8) hin zu dem Raummittenabschnitt bzw. -bereich (16) der Innenraumerweiterung (10) ermöglichen, vorzugsweise das textile Flächengebilde (8) hin zu dem Raummittenabschnitt bzw. -bereich (16) der Innenraumerweiterung (10) ziehen.

4. Innenraumerweiterungsvorrichtung (2) nach einem der vorhergehenden Ansprüche 1 bis 3, wobei das textile Flächengebilde (8) aufblasbar und zumindest doppelwandig ist.

5. Innenraumerweiterungsvorrichtung (2) nach Anspruch 4, wobei das aufblasbare zumindest doppelwandige textile Flächengebilde (8) dazu vorgesehen und ausgebildet ist, als pneumatischer Betätigungsmechanismus für ein Ausfahren und/oder Ausklappen des beweglichen Abschnitts (6) der Innenraumerweiterungsvorrichtung (2) zu sorgen.

6. Innenraumerweiterungsvorrichtung (2) nach einem der vorhergehenden Ansprüche 1 bis 5, wobei das textile Flächengebilde (8) zumindest eine Anbindung (64, 66) zum Kniehebel (14) aufweist, welcher dafür vorgesehen und ausgebildet ist, das textile Flächengebilde (8) hin zu dem Raummittenabschnitt bzw. -bereich (16) der Innenraumerweiterung (10) zu ziehen.

7. Innenraumerweiterungsvorrichtung (2) nach Anspruch 6, wobei das textile Flächengebilde (8) zumindest eine Anbindung (64, 66) zum Kniehebel (14) aufweist, wobei die Anbindung (64) an eine Innenhaut (62) des textilen Flächengebildes (8) erfolgt und/oder die Anbindung (66) an einen "auf Null" abgewebten Abschnitt (68) des textilen Flächengebildes (8) erfolgt.

8. Innenraumerweiterungsvorrichtung (2) nach einem der vorhergehenden Ansprüche 1 bis 7, wobei der Kniehebel (14) in der ausgefahrenen und/oder ausgeklappten Position des beweglichen Abschnitts (6) nicht vollständig gestreckt ist und nicht überstreckt ist, sodass dieser dazu vorgesehen und eingerichtet ist, unter alleiniger Einwirkung der Schwerkraft einzufahren und/oder einzuklappen.

9. Innenraumerweiterungsvorrichtung (2) nach einen der Ansprüche 1 bis 8, wobei der Kniehebel (14) zwei Kniehebelteile (34, 36) und ein Positionierführungselement (40) umfasst und wobei der Kniehebel (14) vorgesehen und eingerichtet ist, dass ein minimaler Faltabstand zwischen den Kniehebelteilen (34, 36) in der eingefahrenen und/oder eingeklappten Position des beweglichen Abschnitts (6) nicht unterschritten wird.

10. Innenraumerweiterungsvorrichtung (2) nach Anspruch 9, wobei zumindest einer der beiden Kniehebelteile (34, 36) an dem zu einem, zwischen den Kniehebelteilen (34, 36) gelegenen, Positionierführungselement (40) ausgerichtetem Ende derart gekrümmt, vorzugsweise abgewinkelt, ist, dass eine resultierende Beabstandung zwischen den Kniehebelteilen (34, 36) in der eingefahrenen und/oder eingeklappten Position des beweglichen Abschnitts (6) einen minimalen Faltabstand nicht unterschreitet.

11. Innenraumerweiterungsvorrichtung (2) nach einem der vorhergehenden Ansprüche 1 bis 10, wobei der Kniehebel (14) weiterhin eine Einklappsynchronisierung (52) umfasst, welche Bowdenzüge und/oder Wellen umfasst und dafür vorgesehen und eingerichtet ist, dass sich mehrere vorgesehene Kniehebel (14) nach vorherbestimmtem Muster oder gleichzeitig und simultan bewegen.

12. Innenraumerweiterungsvorrichtung (2) nach einem der vorhergehenden Ansprüche, wobei der Kniehebel (14) weiterhin eine Arretierung (44) umfasst, welche vorgesehen und eingerichtet ist, eine Einrastfunktion, vorzugsweise redundant zu einem Betätigungsmechanismus, auszuführen.

13. Verfahren zum Einfahren und/oder Einklappen eines beweglichen Abschnitts (6) einer Innenraumerweiterungsvorrichtung (2), wobei beim Einfahren und/oder Einklappen des beweglichen Abschnitts (6) zumindest der Schritt ausgeführt wird:
Bewegen eines an einem Eckabschnitt (12) der Innenraumerweiterungsvorrichtung (2) angeordneten Kniehebels (14) hin zu einem Raummittenabschnitt bzw. -bereich (16) einer von dem beweglichen Abschnitt (6) und einem textilen Flächengebilde (8) ausgebildeten bzw. bereitgestellten Innenraumerweiterung (10), und ein damit einhergehendes Ermöglichen einer Bewegung des textilen Flächengebildes (8) hin zu dem Raummittenabschnitt bzw. - bereich (16) der Innenraumerweiterung (10), vorzugsweise ein Ziehen des textilen Flächengebildes (8) hin zu dem Raummittenabschnitt bzw. -bereich (16) der Innenraumerweiterung (10).

14. Verwendung der Innenraumerweiterungsvorrichtung (10) nach einem der Ansprüche 1 bis 12 zur Innenraumerweiterung (10) einer Unterbringungseinrichtung, bevorzugt eines Fahrzeugs (4) oder eines Anhängers, weiter bevorzugt eines Campingfahrzeugs oder Campinganhängers.

15. Unterbringungseinrichtung, bevorzugt Fahrzeug (4) oder Anhänger, weiter bevorzugt Campingfahrzeug oder Campinganhänger, mit einer Innenraumerweiterungsvorrichtung (2) nach einem der Ansprüche 1 bis 12.
